**Europäisches Patentamt**

**European Patent Office**

**Office européen des brevets**

(19)

(11) Veröffentlichungsnummer: **0 038 506**
A2

# (12) EUROPÄISCHE PATENTANMELDUNG

(21) Anmeldenummer: **81102830.7**

(22) Anmeldetag: **13.04.81**

(51) Int. Cl.³: **G 09 G 3/00**
**H 04 M 1/00**

(30) Priorität: **17.04.80 DE 3014845**

(43) Veröffentlichungstag der Anmeldung:
**28.10.81 Patentblatt 81/43**

(84) Benannte Vertragsstaaten:
**AT BE FR IT NL SE**

(71) Anmelder: **SIEMENS AKTIENGESELLSCHAFT Berlin
und München**
**Postfach 22 02 61**
**D-8000 München 22(DE)**

(72) Erfinder: **Blossfeldt, Dieter, Dipl.-Ing.**
**Hirsch-Gereuth-Strasse 31**
**D-8000 München 70(DE)**

(54) Schaltungsanordnung zur Ansteuerung von, insbesondere Endgeräten in Fernsprechanlagen zugehörigen optoelektronischen Anzeigeelementen.

(57) Die Erfindung betrifft eine Schaltungsanordnung zur Ansteuerung einer Mehrzahl von optoelektronischen Anzeigeelementen, z.B. Leuchtdioden, z.B. zur Anzeige von Vermittlungs – und/oder Betriebszuständen, wobei die Anzeigeelemente matrixmäßig angeordnet sind und über die Matrixsteuerleitungen ansteuerbar sind.

Die Aufgabe der Erfindung besteht darin, die Anzeigeelemente so zu beschalten, daß bei gleicher Ansteuerung über die Matrixsteuerleitungen ein geringerer Stromverbrauch vorliegt.

Dies erfolgt dadurch, daß bei gleichzeitigem Ansteuern von Anzeigeelementen (LED1, LED3) in unterschiedlichen Matrixspalten diese Anzeigeelemente hintereinander geschaltet werden und daß bei Verwendung von Anzeigeelementen aus nur einer Matrixspalte (LED1, LED2) (LED3, LED4) oder bei keiner Anzeige durch eine Strombegrenzung (BG) der passende Abschlußwiderstand für die ferne Stromversorgung der Anzeigeeelemente hergestellt wird.

Hieraus ergibt sich der Vorteil, daß bei Hintereinanderschaltung von zwei Anzeigeelementen ein Anzeigeelement bereits einen Teil des sonst je Anzeigeelement notwendigen Vorwiderstandes darstellt und auch bei partiellem Anzeigeelementbetrieb bei unterschiedlich langen Zuleitungen ein optimaler Eingangswiderstand für die Stromversorgung über die Teilnehmerleitung gegeben ist.

EP 0 038 506 A2

COMPLETE DOCUMENT

./...

SIEMENS AKTIENGESELLSCHAFT            Unser Zeichen
Berlin und München                   VPA 80 P 6 0 5 8 E

Schaltungsanordnung zur Ansteuerung von, insbesondere
Endgeräten in Fernsprechanlagen zugehörigen optoelektronischen Anzeigeelementen

Die Erfindung betrifft eine Schaltungsanordnung zur Ansteuerung einer Mehrzahl von optoelektronischen Anzeigeelementen, z.B. Leuchtdioden, insbesondere von
solchen, die an Endgeräten in Fernsprechanlagen zur
optischen Anzeige von Vermittlungszuständen und/oder
Betriebszuständen dienen, wobei diese Anzeigeelemente
Bestandteil einer Matrixanordnung sind und durch Anlegen von Steuerinformationen an die diesbezüglichen
Ansteuerleitungen jeweils einzeln oder zu mehreren
aktivierbar sind.

Zur Anzeige bestimmter Betriebszustände werden optoelektronische Anzeigeelemente in erster Linie in Form
der sogenannten Leuchtdioden in vielfacher Weise eingesetzt. Als Beispiel der Anwendung in Fernsprechanlagen wird auf den Einsatz an Teilnehmerstellen hingewiesen, an denen durch die Betätigung ― unterschiedlicher Tasten unmittelbar eine Vermittlungstätigkeit vorgenommen werden kann. Diesen Tasten sind
optische Anzeigeelemente in Form von Leuchtdioden zugeordnet. Durch eine entsprechende Ansteuerung dieser
Leuchtdioden können bestimmte Betriebs- bzw. Belegungszustände der betreffenden Anlage bzw. der Teilnehmerstellen dieser Anlage durch unterschiedliche Leuchtzustände signalisiert werden. Ist zumindest eine
Gruppe dieser Leuchtdioden in einer Matrix angeordnet,
so erfolgt ihre Wirksamschaltung durch die über eine
entsprechende Steuereinheit vorzunehmende Anschaltung
von Steuersignalen an eine bestimmte von jeweils

Rs 1 MSt/16.04.1980

mehreren Spalten- bzw. Zeilenleitungen. Jeder dieser Leitungen kann ein elektronischer Halbleiterschalter, z.B. ein Transistor, als Steuerschalter, der durch die genannten Steuerinformationen jeweils durchschaltbar ist, zugeordnet sein. Die spalten- und zeilenweise Ansteuerung der einzelnen Leuchtdioden in der Matrixanordnung kann im Multiplexbetrieb vorgenommen werden. Dadurch können im Ansteuerkreis Speicherelemente, in denen der jeweils notwendige Schaltzustand einer jeden Leuchtdiode abgespeichert ist, eingespart werden.

In den Einsatzfällen, in denen neben der genannten Matrixanordnung noch andere elektronische Baueinheiten vorhanden sind, steht in der Regel eine hinsichtlich ihres Spannungswertes auf die Versorgungsspannung dieser Baueinheiten abgestimmte einzige Spannungsquelle zur Verfügung. Im allgemeinen ist als Versorgungsspannung für die optoelektronischen Anzeigeelemente, z.B. Leuchtdioden, eine geringere Versorgungsspannung erforderlich. Um die genannte Spannungsquelle als Betriebsspannung verwenden zu können, wird ein entsprechend dimensionierter Vorwiderstand angeordnet. Ein derartiger Vorwiderstand ist ohnehin zum Ausgleich der Toleranzen im Durchgangswiderstand der optoelektronischen Anzeigeelemente erforderlich. Durch eine derartige strombegrenzende Massnahme lässt sich die schädliche Auswirkung eines durch die Toleranzen im Durchgangswiderstand bedingten hohen Spitzenstroms für das jeweils aktivierte Anzeigeelement vermeiden. Bei der Anordnung dieser Anzeigeelemente in einer Matrix ist somit zumindest für die eine Art von Ansteuerleitungen, z.B. Spaltenleitungen, jeweils ein derartiger Vorwiderstand vorzusehen. Dieser liegt beispielsweise in der Hauptstromstrecke des einer jeden derartigen Leitung als Steuerschalter zugeordneten steuerbaren Halbleiterschalters.

Die an den genannten Vorwiderständen auftretende Verlustleistung kann sich in den Fällen störend auswirken, in denen die genannten optoelektronischen Anzeigeelemente in Geräten eingesetzt werden, deren Gesamtspeiseleistung über entsprechende Speiseleitungen, die je nach Einsatzort unterschiedliche Leitungslängen aufweisen, übertragen wird. Dies wäre beispielsweise dann der Fall, wenn die Anzeigeelemente an Teilnehmerstellen einer speziellen Art von Fernsprechanlagen angeordnet sind. Es ist erforderlich, den Gesamtstrombedarf eines derartigen Endgerätes möglichst gering zu halten. Bei der Festlegung des Spannungswertes für eine zentrale Speisespannungsquelle, die die Speiseleistung für die in einem derartigen Endgerät vorhandenen Baueinheiten liefert, ist der Spannungsabfall zu berücksichtigen, der bei einer vorgegebenen Gesamtstromaufnahme sich für die grösste Leitungslänge ergibt. Ein grosser Strombedarf würde somit beim Anschluss des Endgerätes an eine äusserst kurze Leitung eine entsprechend grosse und somit äusserst nachteilige Verlustwärme ergeben.

Es ist die Aufgabe der Erfindung, für optoelektronische Anzeigeelemente in Verbindung mit ihrer Spannungsversorgung eine Anordnung anzugeben, die in gleicher Weise wie die eingangs erwähnte Matrixanordnung, über den Zeilen- bzw. Spaltenleitungen entsprechende Anschlusspunkte ansteuerbar ist und die eine Verminderung der notwendigen Stromaufnahme zulässt. Dies wird bei einer Anordnung der eingangs genannten Art dadurch erreicht, dass diejenigen optischen Anzeigeelemente, die jeweils über dieselbe, der einen Art von Matrixleitungen,(z.B. Zeilenleitungen) zugehörigen Ansteuerleitungen vermittels eines individuell zugeordneten Steuerschalters wirksam schaltbar sind, eine Reihenschaltung bilden, die an der Versorgungsspannung unter Zwischenschaltung einer strombegrenzenden Anordnung angeschlossen ist, und dass jede, aus dem Steuerschalter und dem optoelektronischen Anzeigeelement bestehende Kombination einer jeden Reihenschaltung jeweils durch einen steuerbaren Halbleiter-Schalter unmittelbar überbrückbar ist, dessen Ansteueranschluss jeweils einen, der anderen Art von Matrixleitungen (z.B. Spaltenleitungen) zugehörigen Ansteuerleitungen entspricht, dass bei Vorliegen einer die Durchschaltung aller Halbleiter-Schalter bewirkenden Ansteuerinformation ein die strombegrenzende Anordnung selbsttätig hochohmig schaltendes Steuersignal abgeleitet wird.

Zur Senkung des Stromverbrauches können demnach mindestens zwei optoelektronische Anzeigeelemente bei entsprechender Spannungsversorgung in Reihe geschaltet sein. Die Auswahl der jeweils zu aktivierenden Anzeigeelemente erfolgt durch das gleiche Ansteuerprinzip, wie bei der eingangs erwähnten Matrixanordnung. Es ist somit bei Anwendung der gleichen Ansteuereinheit ohne weiteres ein Austausch möglich. Bei einer nach dem Multiplexprinzip erfolgenden Ansteuerung ist für jede Kombination aller Reihenschaltungen jeweils nur ein, ihre Überbrückung ermöglichender Steuerschalter vorzusehen. Diejenigen Anzeigeeinheiten einer jeden Reihenschaltung, die nicht aktiviert sein sollen, werden durch den ihnen jeweils mit seiner Hauptstromstrecke parallel liegenden Steuerschalter wirksam überbrückt. Die Ansteuersignale hierzu werden durch die Steuereinheit an die betreffenden Steueranschlüsse angeschaltet. Sind die ihrerseits in Reihe liegenden Steuerschalter hochohmig geschaltet, so ist die Wirksamschaltung aller in der Reihenschaltung liegenden Anzeigeelemente möglich. Erfindungsgemäss wird in den Fällen, in denen über die Ansteuerlogik an den entsprechenden Ansteuerleitungen eine Ansteuerinformation vorliegt, die eine gleichzeitige Durchschaltung dieser zur Überbrückung dienenden Halbleiterschalter ermöglicht, ein in der Versorgungsspannungsleitung liegender Strombegrenzer hochohmig geschaltet. Dadurch fliesst über die betreffenden Halbleiterschalter nur ein praktisch zu vernachlässigender Strom. Durch das Vorschalten eines Strombegrenzers wird eine Verringerung der Verlustleistung erreicht. Die Vorwiderstände entfallen.

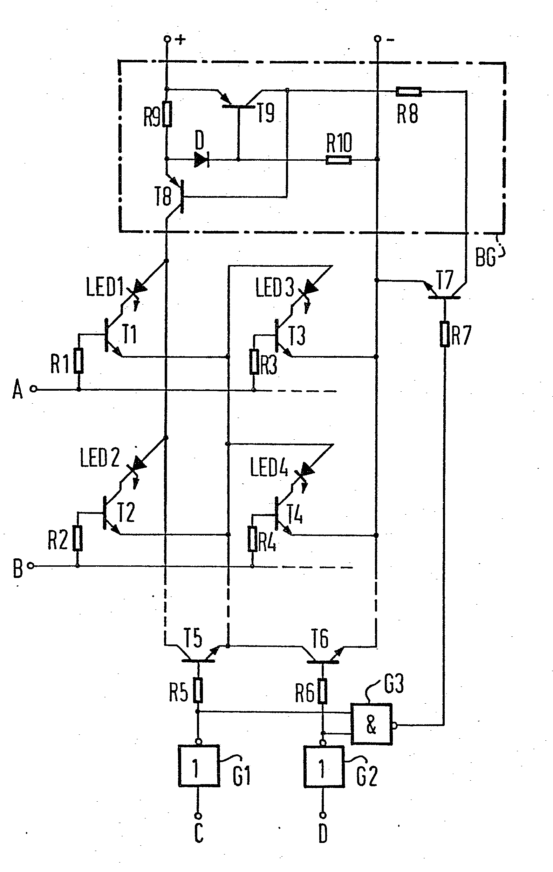

Die Erfindung wird anhand eines in der Zeichnung dargestellten Ausführungsbeispiels, das lediglich die für das Verständnis erforderlichen Einzelheiten enthält, näher erläutert.

Die Figur enthält beispielhaft vier optoelektronische Anzeigeelemente in Form der Leuchtdioden LED 1 bis LED4. Diese Leuchtdioden werden einzeln oder zu mehreren in beliebiger Kombination durch entsprechende Ansteuersignale, die von einer nicht dargestellten Steuereinheit an die Anschlusspunkte A, B bzw. C, D angelegt werden, aktiviert. Die Anschlusspunkte A und B entsprechen den Anschlusspunkten der Zeilenleitungen und die Anschlusspunkte C und D den Anschlusspunkten der Spaltenleitungen einer normalen Matrixanordnung. Es sind jeweils nur zwei Zeilen- bzw. Spaltenleitungen dargestellt. Die Anordnung kann selbstverständlich sowohl hinsichtlich der Anzahl der Zeilenleitungen als auch hinsichtlich der Anzahl der Spaltenleitungen entsprechend erweitert werden. Die in der dargestellten Weise in einer Matrixanordnung enthaltenen Leuchtdioden können beispielsweise an einer als Endgerät in einer Fernsprechanlage dienenden Teilnehmerstelle angeordnet sein und dort u.a. beispielsweise zur Anzeige der Betriebs- bzw. Belegungszustände anderer Teilnehmerstellen dienen. Die Ansteuerung der einer normalen Matrix entsprechenden Anschlusspunkte, im Beispiel A bis D, kann durch eine an der Teilnehmerstelle angeordnete Steuereinheit erfolgen. Diese
Steuereinheit kann gegebenenfalls mit einer zentralen
Steueranordnung im Informationsaustausch stehen.

In dem genannten Beispiel würde dann die Speisung
der dargestellten Baueinheit über entsprechende Speiseleitungen aus einer zentralen Speisespannungsquelle
erfolgen. Unter Umständen kann an jeder Teilnehmerstelle zunächst eine Reglereinheit mit der entsprechenden Speiseleitung verbunden sein. Diese würde
dann die Versorgungsspannung für sämtliche, grösstenteils aus elektronischen Bauelementen bzw. Baustufen
gebildeten Baueinheiten abgeben. Für das Ausführungsbeispiel werde angenommen, dass aus einer solchen
Reglereinheit an den mit den Plus- bzw. mit dem Minuszeichen versehenen Anschlusspunkten eine entsprechende
Spannung zur Verfügung gestellt wird. Diese könnte
beispielsweise einen üblicherweise für die Versorgung
von elektronischen Bauelementen bzw. Baustufen notwendigen Spannungswert von 6 Volt aufweisen.

Unter der Annahme, dass der Spannungsabfall über einer
Leuchtdiode LED im durchgeschalteten Zustand, d.h.
in ihrem Leuchtzustand angenähert 3 Volt beträgt,
könnten demnach zwei derartiger Leuchtdioden in
jeweils einer Reihenschaltung angeordnet sein. Die
Anzahl dieser Reihenschaltungen kann über die in der
Figur dargestellte Anzahl von zwei Reihenschaltungen
hinausgehen. Die generelle Erweiterungsmöglichkeit
ist durch teilweise gestrichelte Verbindungslinien
angedeutet. Bei entsprechender Spannungsversorgung
können auch mehr als zwei Leuchtdioden in der jeweiligen Reihenanordnung liegen.

Jede Leuchtdiode LED1 bis LED4 liegt jeweils in Reihe mit einem Steuerschalter in Form des Transistors T1 bis T4. Die einer Zeilenleitung zugehörigen Steuerschalter, also die Steuerschalter T1 und T3 für die Zeilenleitung A, sind über jeweils einen Basiswiderstand R1 bzw. R3 durch ein entsprechendes Ansteuersignal am Anschlusspunkt A aufsteuerbar. Das gleiche gilt für die Steuerschalter T2 und T4, die über den jeweiligen Basiswiderstand R2 bzw. R4 an der anderen Zeilenleitung B angeschlossen sind. Durch Anlegen eines beispielsweise Logikpotential 1 entsprechenden Ansteuersignals an diese Anschlusspunkte können somit die Leuchtdioden LED1 und LED3 bzw. LED2 und LED4 wirksam geschaltet werden. Jede vorhandene Reihenschaltung besteht somit aus der Reihenanordnung von zwei Teilkombinationen. Jede dieser Teilkombinationen wird ihrerseits aus der Reihenschaltung einer Leuchtdiode und der Hauptstromstrecke eines als Steuerschalter dienenden Transistors gebildet. Jede dieser Teilkombinationen ist jeweils durch einen steuerbaren Halbleiterschalter in Form des Transistors T5 bzw. T6 überbrückbar. Diese Überbrückung wird immer dann vorgenommen, wenn die jeweils zuzuordnende Leuchtdiode unwirksam bleiben soll. Wenn beispielsweise von den in Reihe liegenden Leuchtdioden LED1 und LED3 nur die Leuchtdiode LED3 durch ein entsprechendes Ansteuersignal am Anschlusspunkt A in den Leuchtzustand geschaltet werden soll, wird der Transistor T5 durchgesteuert, so dass die aus der Leuchtdiode LED1 und dem Transistor T1 bestehende Teilkombination überbrückt ist. Dies gilt in gleicher Weise für die jeweils anderen Teilkombinationen. Die Transistoren T5 und T6, die im aufgesteuerten Zustand diese Überbrückungen ermöglichen, werden durch entsprechende Ansteuersignale an den Anschlusspunkten C und D wirksam geschaltet. Im Ansteuerkreis für jeden dieser Transistoren liegt neben dem Basiswiderstand R5 bzw. R6 ein Inverter G1 bzw. G2. Liegt an den Anschlusspunkten C bzw. D ein dem Logikpotential 1 entsprechendes Ansteuerpotential, so ist der Transistor T5 bzw. T6 gesperrt. Das bedeutet, dass in einem solchen Fall die jeweilige Teilkombination nicht überbrückt wird und somit die betreffende Leuchtdiode in Abhängigkeit von einem an dem Anschlusspunkt A bzw. B anliegendem und gleichfalls dem Logikpotential 1 entsprechenden Ansteuerpotential in den Leuchtzustand geschaltet wird. Über die Anschlusspunkte A bis D können somit die einzelnen Leuchtdioden in gleicher Weise wie diejenigen Dioden, die in einer eingangs erwähnten Matrixanordnung vorhanden sind, angesteuert werden. Es liegt somit für die in unterschiedlichen Kombinationen einzuschaltenden Leuchtdioden die gleiche Ansteuertabelle zugrunde. Die entsprechenden Ansteuersignale werden im Multiplexbetrieb an die einzelnen Anschlusspunkte angelegt. Bei einer gemultiplexten Ansteuerung kann für diejenigen Teilkombinationen, die einem einer Spaltenleitung entsprechenden Anschlusspunkt der matrixförmigen Anordnung zugeordnet sind, jeweils ein einziger Transistor für die Überbrückung vorgesehen sein.

Es sind sowohl diejenigen Reihenschaltungen, die die Leuchtdioden enthalten, als auch die Reihenschaltung der zur Überbrückung herangezogenen Transistoren zueinander parallel über eine strombegrenzende Anordnung BG an die Versorgungsspannung angeschaltet. Innerhalb dieser Anordnung liegt im Hauptstromzweig neben einem Widerstand R9 ein Längstransistor T8. Der Widerstandswert des Widerstandes R9 ist äusserst gering und kann beispielsweise bis zu 3 Ohm betragen. Der Längstransistor wird seinerseits von einem Hilfstransistor T9 in an sich bekannter Weise beeinflusst. Der Hilfstransistor wird seinerseits durch die in Durchlassrichtung beanspruchte Diode D auf deren Spannungsabfall gesteuert. Diese Diode bildet in Verbindung mit dem Widerstand R10 eine Querverbindung zwischen den Polen der Versorgungsspannung. Im normalen Betriebsfall besteht nahezu kein Spannungsabfall im Längszweig der begrenzenden Anordnung. Die begrenzende Wirkung setzt erst bei einem bestimmten Wert des aufgenommenen Stromes ein. Dadurch werden Stromspitzen für die Leuchtdioden, die ihre Lebensdauer beeinträchtigen, vermieden. Derartige Stromspitzen könnten auftreten, da aufgrund von Bauteiletoleranzen die Leuchtdioden sich im Wert ihres Durchgangswiderstandes beträchtlich unterscheiden können.

Die aus diesem Grunde bei der eingangs erwähnten Matrixanordnung vorhandenen Vorwiderstände können demnach bei der Anordnung nach der Figur entfallen. Dadurch wird eine Verringerung der Verlustleistung erreicht.

Der Längstransistor T8 der strombegrenzenden Anordnung BG wird zusätzlich durch den Transistor T7 über den Widerstand R8 basisseitig beeinflusst. Dieser Steuertransistor T7 wird über seinen Basiswiderstand R7 durch die Ausgangssignale des NAND-Schaltgliedes G3 gesteuert. Dieses Schaltglied ist eingangsseitig mit den Ausgängen der Inverter G1 bzw. G2 verbunden. Damit wird erreicht, dass in den Fällen, in denen an den Anschlusspunkten C und D gleichzeitig ein dem Logikpotential Null entsprechendes Ansteuerpotential anliegt, die strombegrenzende Anordnung BG hochohmig geschaltet wird. Obwohl beim Anlegen der genannten Steuerpotentiale die Transistoren T5 und T6 durchgeschaltet sind, hat dies nur eine geringfügige Stromaufnahme zur Folge, da in einem solchen Fall die Anordnung BG über den entsprechend gesteuerten Längstransistor T8 einen hohen im Stromkreis liegenden Widerstand darstellt. Diese Hochohmigschaltung der strombegrenzenden Anordnung BG wird in dem betreffenden Ansteuerfall jeweils selbsttätig durch den dabei im Sperrzustand gesteuerten Transistor T7 erreicht. Es wird durch ihn in diesem gesperrten Zustand in der Weise in den vorhandenen
Regelkreis eingegriffen, dass während seines Sperrzustandes die Zuführung von Aufsteuerpotential für
den Transistor T8 unterbunden wird.

1 Patentanspruch
1 Figur

<u>Patentanspruch</u>

Schaltungsanordnung zur Ansteuerung einer Mehrzahl von optoelektronischen Anzeigeelementen, z.B. Leuchtdioden, insbesondere von solchen, die an Endgeräten in Fernsprechanlagen zur optischen Anzeige von Vermittlungszuständen und/oder Betriebszuständen dienen, wobei diese Anzeigeelemente Bestandteil einer Matrixanordnung sind und durch Anlegen von Steuerinformationen an die diesbezüglichen Ansteuerleitungen jeweils einzeln oder zu mehreren aktivierbar sind, d a d u r c h   g e k e n n z e i c h n e t , dass diejenigen optischen Anzeigeelemente (LED 1, LED3), die jeweils über dieselbe, der einen Art von Matrixleitungen (z.B. Zeilenleitungen) zugehörigen Ansteuerleitungen (AB) vermittels eines individuell zugeordneten Steuerschalters (T1, T3) wirksam schaltbar sind, eine Reihenschaltung bilden, die an der Versorgungsspannung unter Zwischenschaltung einer strombegrenzenden Anordnung (BG) angeschlossen ist, und dass jede, aus dem Steuerschalter (T1) und dem optoelektronischen Anzeigeelement (LED1) bestehende Kombination einer jeden Reihenschaltung (LED1, LED3, bzw. LED 2, LED4) jeweils durch einen steuerbaren Halbleiter-Schalter (T5, T6) unmittelbar überbrückbar ist, dessen Ansteueranschluss jeweils einen, der anderen Art von Matrixleitungen,(z.B. Spaltenleitungen) zugehörigen Ansteuerleitungen (CD) entspricht, dass bei Vorliegen einer die Durchschaltung aller Halbleiter-Schalter (T5, T6) bewirkenden Ansteuerinformation ein die strombegrenzende Anordnung (BG) selbsttätig hochohmig schaltendes Steuersignal (T7) abgeleitet wird.

1/1